# EUROPÄISCHE PATENTANMELDUNG

(11) **EP 0 947 364 A2**
(43) Veröffentlichungstag der Anmeldung: **06.10.1999**
(21) Anmeldenummer: 99104706.9
(22) Anmeldetag: 10.03.1999
(51) Int. Cl.: B60J 3/02

(54) **Sonnenblende für Fahrzeuge**

(30) Priorität: 28.03.1998 DE 19813916
(71) Anmelder: Johnson Controls Interiors GmbH, 42285 Wuppertal (DE)
(72) Erfinder: Viertel, Lothar, 66802 Altforweiler (DE)

(57) **Zusammenfassung**

Beschrieben wird eine Sonnenblende mit einem Sonnenblendenkörper (6), der im wesentlichen aus einem Blasformkörper besteht. Im Sonnenblendenkörper (6) ist ein Lager (10) mit einem Verlängerungssteg (16) eingelagert. Am Verlängerungssteg (16) befinden sich Aufnahmen (17) für Kontaktbleche (18, 19). Die Kontaktbleche, die mit Kontakten (5) an der Sonnenblendenachse (4) kontaktieren, tragen aufgesteckte Kabelschuhe (45), von denen Kabel (44) zu einem in einer Nische (31) im Sonnenblendenkörper (6) angeordneten Mikroschalter (32) ausgehen. Der Sonnenblendenkörper (6) ist mit einer eine Abdeckung (3) für einen Spiegel (2) aufweisenden Spiegelbaueinheit ausgerüstet. Über eine Betätigung der Abdeckung (3) ist der Mikroschalter (32) schaltbar und über diesen ist eine Beleuchtungseinrichtung aus- oder einschaltbar.

## Beschreibung

Die Erfindung bezieht sich auf eine Sonnenblende für Fahrzeuge der im Oberbegriff des Anspruchs 1 näher angegebenen Art.

Eine solche Sonnenblende ist durch die DE 196 35 683 A1 bekanntgeworden.

Aufgabe der Erfindung ist es, eine solche Sonnenblende derart weiterzubilden, daß sie mit einer Spiegelbaueinheit und elektrischen Schaltungsmitteln zum Ein- und Ausschalten einer elektrischen Beleuchtungseinrichtung ausgerüstet werden kann, wobei ein möglichst geringer Montageaufwand, eine gute Qualität und eine kostengünstige Konzeption, insbesondere im Hinblick auf einen Großserieneinsatz angestrebt wird.

Die zur Lösung dieser Aufgabe erfindungsgemäß vorgesehenen Maßnahmen sind im Anspruch 1 angegeben, während in den Unteransprüchen zweckmäßige Ausgestaltungen und vorteilhafte Weiterbildungen der Erfindung gekennzeichnet sind.

Im folgenden wird die Erfindung anhand eines auf der Zeichnung dargestellten Ausführungsbeispiels näher erläutert und es zeigen:
- Fig. 1: eine komplette Sonnenblende in Ansicht,
- Fig. 2: den Lagerbereich der Sonnenblende in einer schaubildlichen Darstellungsmanier,
- Fig. 3: die Sonnenblende nach Fig. 1 in einer Fertigungsphase und
- Fig. 4 - 7: verschiedene Schnitte durch den Sonnenblendenkörper entsprechend den Linien A - A, B - B und C - C.

In der Zeichnung ist eine komplette Sonnenblende 1, allerdings ohne Gegenlagerböckchen dargestellt. Dabei ist eine elektrifizierte Ausführungsform gewählt mit einer externen, z. B. im Dachhimmel eines Fahrzeugs untergebrachten, nicht gezeigten, Beleuchtungsquelle. Die Sonnenblende 1 ist mit einer Spiegelbaueinheit ausgestattet, die einen Spiegel 2, einen Spiegelrahmen 29 und eine Schieberabdeckung 3 für den Spiegel 2 umfaßt. Die Stromzufuhr für die Beleuchtungseinrichtung, die gewünschtenfalls auch im Sonnenblendenkörper 6 angeordnet sein kann, erfolgt über die Sonnenblendenachse 4, die mit getrennten Polen bzw. Kontakten 5 ausgestattet ist, zu den im Sonnenblendenkörper 6 befindlichen Schalterstellen 7 und 8.

Der Sonnenblendenkörper 6 ist aus einem Extrusionsblasteil gebildet und besteht vorzugsweise aus PP-Material. Der Sonnenblendenkörper 6 ist mit einer Umhüllung 46 ausgestattet, wobei das Umhüllungsmaterial aus PVC, TPO, kaschiertem Textilmaterial, Amaretta, Leder oder dgl. bestehen kann.

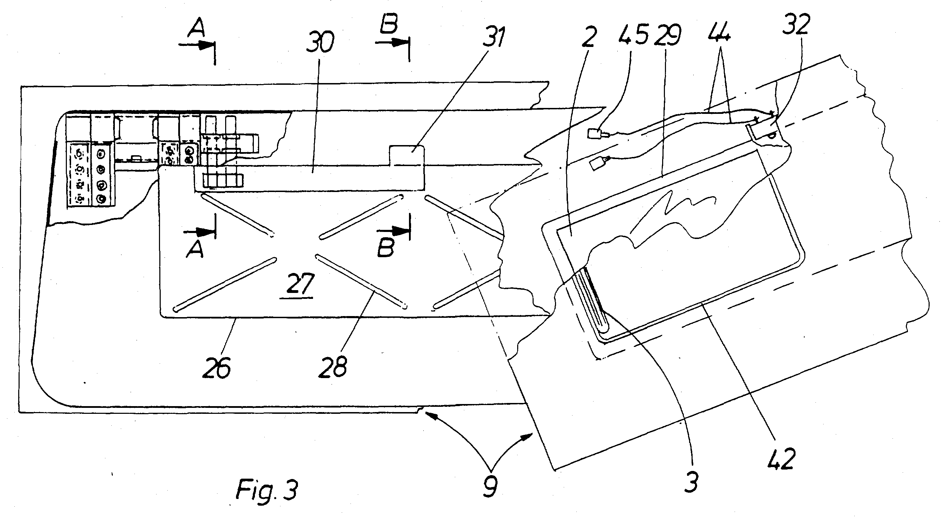

Im Sonnenblendenkörper 6 ist ein Lager 10 eingelagert, welches nach Fig. 2 aus einem annähernd rechteckigen Grundkörper besteht, der als Kunststoff-Spritzgußteil, vorzugsweise aus PP-Material ausgebildet ist. Das Lager 10 weist halbkreisförmige zueinander versetzte Lagerschalen 11 für die Sonnenblendenachse 4 und deren Lagerung auf. Ferner weist das Lager 10 daran ausgebildete U-förmige Wandungen 12 mit konisch zulaufenden, kreisförmigen Öffnungen 13 zur optimalen Verankerung mit den Wandungen des Sonnenblendenkörpers 6 auf. Das Lager 10 weist zudem einen endseitigen Lagerbereich 15 mit einem Verlängerungssteg 16 auf, der mit taschenartigen Aufnahmen 17 für die Halterung von Kontaktblechen 18, 19 versehen ist. Der Verlängerungssteg 16 wird endseitig durch eine Abstützrippe 20 begrenzt. Das Lager 10 nimmt eine über den Freibereich 22 geschobene Feder 21 auf, die die Sonnenblendenachse 4 klemmt und den Sonnenblendenkörper 6 in gewünschten Winkel- und Rastlagen hält.

Die Kontaktbleche 18, 19 bestehen aus elektrisch gut leitendem Material und weisen krallenartig ausgestellte Zungen 23 auf, die nach dem Einführen in die taschenartigen Aufnahmen 17 durch Verkrallen einen festen unlösbaren Sitz garantieren. Aus funktionalen und fertigungstechnischen Gründen ist ein Kontaktblech 18 geradlinig ausgebildet, während das andere Kontaktblech 19 eine etwa rechtwinklige Abstufung 24 entsprechend Fig. 2 aufweist.

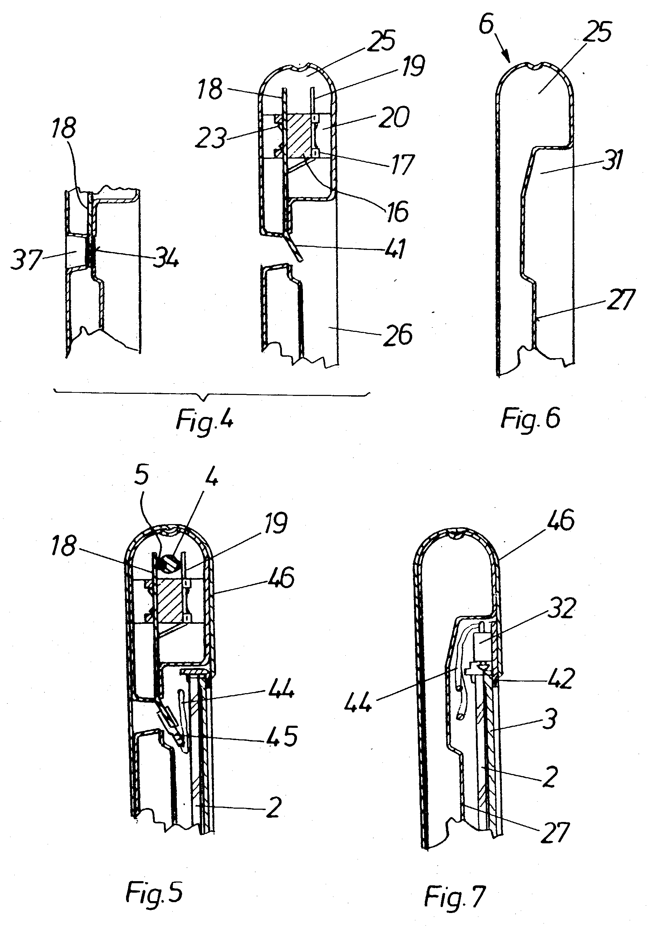

Entsprechend dem Verfahren zum Herstellen einer kompletten Sonnenblende 1 mit integriertem Lager 10 unter Nutzung der Extrusionsblastechnik wird das Lager 10 in die entsprechende Blasform eingeführt und erhält in seiner beschriebenen Gesamtheit eine unlösbare Fixierung im Blendenhohlraum 25 entsprechend Fig. 4, Schnitt A - A.

Gemäß den Darstellungen nach Fig. 3 sowie dem Schnitt A - A (Fig. 4) und dem Schnitt B - B (Fig. 6), ist die Blasform so gestaltet, daß sich beim Blasformvorgang eine etwa rechteckige muldenartige Vertiefung 26 mit im Boden 27 derselben befindlichen Versteifungsrippen 28 ergibt. Die Vertiefung 26 dient, wie in Fig. 5 (Schnitt A - A) gezeigt, zur Aufnahme einer Spiegelbaueinheit.

Im Sonnenblendenkörper 6 ist ferner ein länglicher, insbesondere aus Fig. 3 ersichtlicher Kabelkanal 30 ausgebildet. Der Kabelkanal 30 weist einendig einen Freibereich 31 nach Schnitt B - B, Fig. 6 zwecks Aufnahme eines Mikroschalters 32 auf. Anderendig reicht der Kabelkanal 30 bis in den durch die Kontaktbleche 18, 19 gebildeten Kontaktbereich, wie im Schnitt A - A, Fig. 4 dargestellt. Die Formgebung und maßliche Festlegung ist dabei so getroffen, daß sich eine verdünnte Wandung 34 ergibt, die auf den Kontaktblechen 18, 19 aufliegt. Die dem Kabelkanal 30 gegenüberliegende Wandung des Sonnenblendenkörpers 6 weist eine Sicke 37 auf, deren Boden ebenfalls, jedoch von der anderen Seite her an den Kontaktblechen 18, 19 anliegt. Der Boden der Sicke 37 besteht ebenfalls aus einer dünnen Wandung. Durch die präzisen maßlichen und möglichen Vorbestimmungen der Blasform entsteht beiderseits der Kontaktbleche 18, 19 eine dünne, filmartige Haut, die leicht zerstört werden kann, und zwar im Regelfall ohne Zuhilfenahme eines Schneidwerkzeugs. Damit können die Enbereiche der Kontaktbleche 18, 19 unter nur geringem Kraftaufwand in eine gewünschte, in den Kabelkanal 30 hineinragende Schräglage (Fig. 4) gedrückt bzw. überführt werden.

Bei der Fertigung der Sonnenblende 1 wird zunächst entsprechend Fig. 3 ein Umhüllungsmaterial-Zuschnitt 9 mit dem Spiegelrahmen 29 einer Spiegelbaueinheit verbunden. Die Verbindung erfolgt durch eine Hochfrequenz-Verschweißung und der Schweißnaht verläuft um das Spiegelfenster 42 herum. Die Spiegelbaueinheit umfaßt den erwähnten Spiegelrahmen 29, die Schieberabdeckung 3, die ggf. auch durch einen Klappdeckel ersetzt werden kann, einen Spiegel 2 und auch den Mikroschalter 32. Der Mikroschalter 32 ist elektrisch leitend mit zwei Kabeln 44 fest verbunden, z. B. durch Löten. Die Kabel 44 tragen an ihren freien Enden daran angeschlagene Kabelschuhe 45, die auf die Maße der Kontaktbleche 18, 19 abgestimmt sind. Bevor die beiden Umhüllungsmaterial-Zuschnitte 9 der Kontur des Sonnenblendenkörpers 6 folgend randseitig miteinander, vornehmlich durch Hochfrequenz-Schweißen verbunden werden, werden die Kabelschuhe 45 auf die freien schräggestellten Steckenden 41 der Kontaktbleche 18, 19 aufgesteckt. Ferner werden die Kabel 44 im Kabelkanal 30 und die Spiegelbaueinheit in die Vertiefung 26 und 31 untergebracht. Nach dem Verschweißen der Umhüllungsmaterial-Zuschnitten 9 liegt dann eine komplett umhüllte Sonnenblende 1 vor.

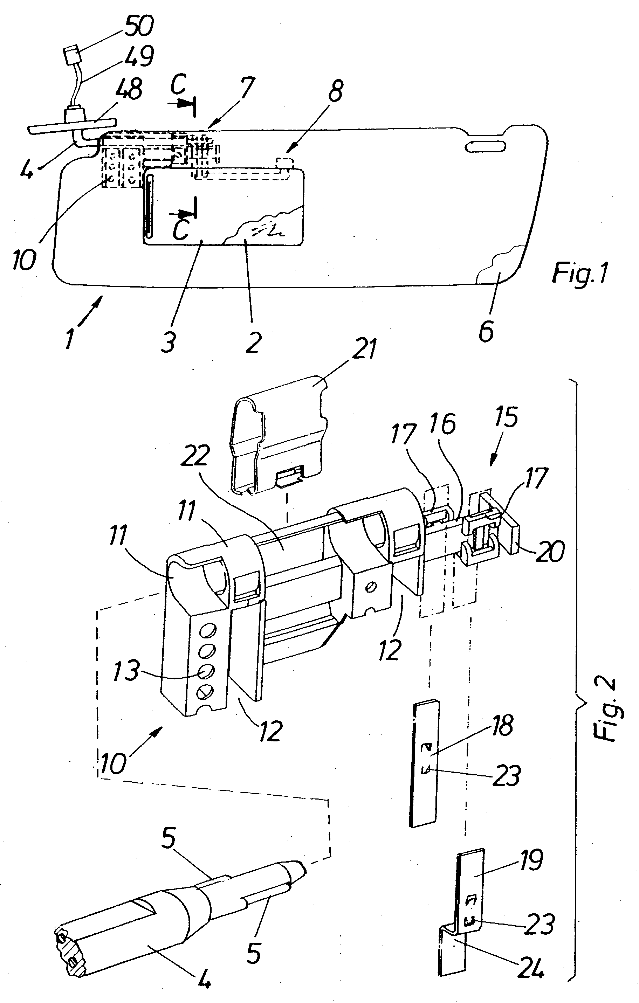

Nachdem nun der Lagerbock 48 mit montierter Sonnenblendenachse 4, bestehend aus einem Kunststoffspritzling, zwei integrierten Kontakten 5, den beiden isolierten Kabeln 49 mit endseitig angebrachter Steckhülse 50 entsprechend Fig. 1 bzw. Fig. 2 in den Sonnenblendenkörper 6 eingedrückt ist, kommen die beiden endseitig voneinander getrennten, in der Sonnenblendenachse 4 integrierten Kontakte 5 entsprechend Fig. 2 mit den beiden getrennt voneinander positionierten Kontaktblechen 18, 19, die in den Blendenhohlraum 25 hineinragen, in Berührung entsprechend Schnitt C - C, Fig. 5. Aufgrund dieses Eletrifizierungskonzepts wird bewirkt, daß insbesondere bei etwa senkrechter Stellung der Sonnenblende 1 dem Öffnen bzw. Verschieben der Schieberabdeckung 3, den Kabelanbindungen 44, den Kontaktblechen 18, 19, den Achskontakten 5 eine Lichtquelle z. B. im Dachhimmel eingeschaltet wird. Durch Schließen der Schieberabdeckung 3 erlischt die Lichtquelle. Die Kontaktierungskonzeption bewirkt darüber hinaus eine sog. Zwangsausschaltung dann, wenn die Sonnenblende 1 aus ihrer etwa senkrechten Lage nach oben geklappt wird, da die Kontakte 5 an der Sonnenblendenachse 4 durch ihre Formgebung nur einen begrenzten Kontaktbereich zulassen entsprechend Fig. 5.

## Patentansprüche

1. Sonnenblende für Fahrzeuge mit einem hohlen, als Blasformkörper ausgebildeten Sonnenblendenkörper (6), der eine annähernd rechteckige Form aufweist und in einem Eckbereich ein Lagergehäuse (10) mit einer Lagerbohrung für die einendige Lagerung einer Sonnenblendenachse (4) trägt, welche von einer vom Lagergehäuse (10) aufgenommenen Rastfeder (21) geklemmt wird, wobei das Lagergehäuse (10) ein erstes sowie ein zweites Paar von jeweils nebeneinander angeordneten und wechselseitig gekrümmten Halbschalen (11) aufweist, die miteinander die Lagerbohrung für den in das Lagergehäuse (10) eingreifenden Bereich der Sonnenblendenachse (4) bilden, wobei zwischen dem ersten und zweiten Paar von Halbschalen (11) Verbindungsstege vorgesehen sind, an denen die die Verbindungsstege übergreifende Rastfeder (21) festgelegt ist, und wobei sich an die Halbschalen (11) des Lagergehäuses (10) jeweils nach unten offene Gehäuseteile anschließen, welche senkrecht zueinander ausgerichtete Wandungen (12) in labyrinthförmiger Anordnung aufweisen, von denen jeweils äußere Wandungen mit Öffnungen (13) versehen sind, parallel an den inneren Breitseiten des Sonnenblendenkörpers (6) anliegen und vom Material des in die Öffnungen eindringenden Sonnenblendenkörpers (6) festgehalten sind, dadurch gekennzeichnet, daß das Lagergehäuse (10) einen Verlängerungssteg (16) mit taschenartigen Aufnahmen (17) zur Halterung von elektrisch leitenden Kontaktblechen (18, 19) aufweist, daß die Kontaktbleche (18, 19) mit jeweils einem ihrer Endbereiche klemmend an der Sonnenblendenachse (4) anliegen und mit daran angeordneten Kontakten (5) zu kontaktieren vermögen, daß die anderen Enden der Kontaktbleche (18, 19) abgewinkelt sind, mit ihren abgewinkelten Enden die Bodenwandung einer im Sonnenblendenkörper (6) von einer Breitseite her ausgebildeten Vertiefung (26) durchsetzen und jeweils einen mit einem Kabel (44) bestückten Kabelschuh (45) tragen, daß die Kabel (44) anderendig elektrisch leitend mit einem in einer Nische (31) im Sonnenblendenkörper (6) angeordneten Mikroschalter (32) verbunden sind, daß in der im Sonnenblendenkörper (6) ausgebildeten Vertiefung (24) eine mit einer Abdeckung (3) versehene Spiegelbaueinheit angeordnet ist und daß der Mikroschalter (32) durch eine Betätigung der Abdeckung (3) schaltbar ist, um eine der Benutzung des Spiegels (2) der Spiegelbaueinheit auch bei Dunkelheit dienende Beleuchtungseinrichtung ein- bzw. auszuschalten.

2. Sonnenblende nach Anspruch 1, dadurch gekennzeichnet, daß der Sonnenblendenkörper (6) an seiner der Vertiefung (26) für die Spiegelbaueinheit abgewandten Breitseite eine im Bereich der die Kabelschuhe (45) tragenden Endbereiche der Kontaktbleche (18, 19) liegende Sicke (37) aufweist.

3. Sonnenblende nach Anspruch 1 oder 2, dadurch gekennzeichnet, daß sich im Boden der Vertiefung (26) von der Nische (31) für den Mikroschalter (32) bis zu den die Kabelschuhe (45) tragenden Endbereichen der Kontaktbleche (18, 19) ein Kabelkanal (30) erstreckt.

4. Sonnenblende nach wenigstens einem der vorangegangenen Ansprüche, dadurch gekennzeichnet, daß der Sonnenblendenkörper (6) zwischen zwei Umhüllungsmaterial-Zuschnitten (9), die mit ihren umlaufenden Rändern miteinander verschweißt sind, aufgenommen ist, von denen einer zuvor mit einer fensterartigen Ausstanzung (42) für den Spiegel (2) und mit der die Abdeckung (3) umfassenden Spiegelbaueinheit nebst Mikroschalter (32) verschweißt wurde.
